(19) **Europäisches Patentamt / European Patent Office / Office européen des brevets**

(11) **EP 4 737 939 A1**

(12) # EUROPEAN PATENT APPLICATION

(43) Date of publication:
06.05.2026   Bulletin 2026/19

(21) Application number: 24210498.2

(22) Date of filing: 04.11.2024

(51) International Patent Classification (IPC):
**G01S 7/41** *(2006.01)*      **G01S 13/88** *(2006.01)*
**G01S 13/931** *(2020.01)*      **G01S 13/60** *(2006.01)*
**G01S 13/87** *(2006.01)*

(52) Cooperative Patent Classification (CPC):
**G01S 7/412; G01S 13/88; G01S 13/931;**
G01S 13/605; G01S 13/874; G01S 2013/93271;
G01S 2013/93272

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **KUMRU, Murat**
**GÖTEBORG (SE)**
• **RYDSTRÖM, Mats**
**BILLDAL (SE)**
• **PANAHANDEH, Ghazaleh**
**GÖTEBORG (SE)**
• **JONASSON, Mats**
**PARTILLE (SE)**
• **ISAAC PRABHAHAR, Dhurai**
**GÖTEBORG (SE)**

(74) Representative: **Ström & Gulliksson AB**
**P.O. Box 4188**
**203 13 Malmö (SE)**

Remarks:
Claims filed after the date of filing of the application (Rule 68(4) EPC).

(54) **DETECTION OF GROUND SURFACE HEIGHT VARIATION IN THE VICINITY OF A VEHICLE**

(57)    A computer-implemented method for detection of ground surface height variation in a vicinity of a vehicle is disclosed. The method comprises acquiring (by processing circuitry of a computer system) measured backscatter from a radar transceiver mounted on the vehicle and directed at the ground surface, comparing (by the processing circuitry) the measured backscatter to expected ground surface backscatter according to a current vehicle motion, and detecting (by the processing circuitry) a ground surface height variation responsive to a difference between the expected ground surface backscatter and the measured backscatter satisfying a detection criterion.

In some examples, the difference may indicate one or more of: a distance from the radar transceiver to the ground surface height variation, and an angular orientation relative the radar transceiver of the ground surface height variation.

Corresponding computer system, vehicle, computer program product, and non-transitory computer-readable storage medium are also disclosed.

FIG. 3

**Description**

**TECHNICAL FIELD**

The disclosure relates generally to sensing of vehicle surroundings. In particular aspects, the disclosure relates to detection of ground surface height variation in the vicinity of a vehicle. The disclosure can be applied to heavy-duty vehicles, such as trucks, buses, mining equipment, and construction equipment, among other vehicle types. The disclosure can be useful for vehicles of any autonomy level (e.g., fully autonomous vehicles as well as vehicles controlled by a human operator). Although the disclosure may be described with respect to a particular vehicle, the disclosure is not restricted to any particular vehicle.

**BACKGROUND**

In the context of vehicle control, it is generally beneficial to have information about the vehicle surroundings. One example of such information relates to ground surface height variations in the vicinity of the vehicle (e.g., edges or drop-offs in the ground surface). For example, it may be beneficial to know if there are ground surface height variations or not, and - if there are ground surface height variations - their location and orientation in relation to the vehicle.

Such information may, typically, be acquired by visual inspection and/or by use of cameras mounted on the vehicle. However, there are situations when sufficient information is unavailable (or cumbersome to acquire) through such known techniques. For example, visual inspection may require an operator to step out of the vehicle to inspect parts of the ground surface which are not visible from the operator seat (a.k.a., blind spots), and camera view may be obstructed in some situations (e.g., by dust, mud, snow, rain, fog, lack of light, etc.). Furthermore, it may be challenging (e.g., for a vehicle operator or an autonomous driving system) to interpret visual images to extract spatial information such as ground surface height variations.

Thus, there is a need for alternative approaches for detection of ground surface height variation in the vicinity of a vehicle.

**SUMMARY**

According to a first aspect of the disclosure, a computer system for detection of ground surface height variation in a vicinity of a vehicle is provided. The computer system comprises processing circuitry configured to acquire measured backscatter from a radar transceiver mounted on the vehicle and directed at the ground surface, compare the measured backscatter to expected ground surface backscatter according to a current vehicle motion, and detect a ground surface height variation responsive to a difference between the expected ground surface backscatter and the measured backscatter satisfying a detection criterion. The first aspect of the disclosure may seek to provide or improve approaches for detection of ground surface height variation in the vicinity of a vehicle. A technical benefit may include enhanced vehicle control and/or increased vehicle safety.

According to a second aspect of the disclosure, a vehicle is provided, which comprises the computer system of the first aspect. The second aspect of the disclosure may seek to provide a vehicle configured for (improved) detection of ground surface height variation in the vicinity of the vehicle. A technical benefit may include enhanced vehicle control and/or increased vehicle safety.

Optionally in some examples, including in at least one preferred example, the vehicle may further comprise one or more radar transceivers mounted on the vehicle and directed at the ground surface, and configured to provide the measured backscatter.

According to a third aspect of the disclosure, a computer-implemented method for detection of ground surface height variation in a vicinity of a vehicle is provided. The method comprises acquiring (by processing circuitry of a computer system) measured backscatter from a radar transceiver mounted on the vehicle and directed at the ground surface, comparing (by the processing circuitry) the measured backscatter to expected ground surface backscatter according to a current vehicle motion, and detecting (by the processing circuitry) a ground surface height variation responsive to a difference between the expected ground surface backscatter and the measured backscatter satisfying a detection criterion. The third aspect of the disclosure may seek to provide or improve approaches for detection of ground surface height variation in the vicinity of a vehicle. A technical benefit may include enhanced vehicle control and/or increased vehicle safety.

Optionally in some examples, including in at least one preferred example, the detected ground surface height variation may comprise an edge of the ground surface. A technical benefit may include that an edge of the ground surface may be avoided, which typically reduces accidents and vehicle damage/wear.

Optionally in some examples, including in at least one preferred example, the method may further comprise determining (by the processing circuitry) the expected ground surface backscatter according to the current vehicle motion.

A technical benefit may include that the backscatter processing is conveniently handled by the same processing circuitry, which may reduce signaling and/or latency.

Optionally in some examples, including in at least one preferred example, the current vehicle motion may comprise vehicle velocity over the ground surface in a direction corresponding to a facing direction or boresight direction of the radar transceiver. A technical benefit may include that the backscatter measurements may be used to estimate/determine the current vehicle motion.

Optionally in some examples, including in at least one preferred example, the measured backscatter may comprise signal power distribution in a space spanned by radial velocity of the radar transceiver relative to the ground surface and by radial distance of the radar transceiver from the ground surface. A technical benefit may include that the measured backscatter is directly represented by parameters readily available from the radar transceiver, which may reduce processing.

Optionally in some examples, including in at least one preferred example, the expected ground surface backscatter may indicate an expected shape in the space spanned by radial velocity of the radar transceiver relative to the ground surface and by radial distance of the radar transceiver from the ground surface. A technical benefit may include that the expected ground surface backscatter is conveniently recognizable.

Optionally in some examples, including in at least one preferred example, comparing the measured backscatter to the expected ground surface backscatter may comprise applying (by the processing circuitry) a spatial filter to the measured backscatter, wherein the spatial filter corresponds to the expected shape in the space spanned by radial velocity of the radar transceiver relative to the ground surface and by radial distance of the radar transceiver from the ground surface. A technical benefit may include simplicity of implementation of the comparison.

Optionally in some examples, including in at least one preferred example, the detection criterion may comprise that a signal power profile of the measured backscatter as filtered has a more prominent power decrease with radial distance than a corresponding signal power profile of the expected ground surface backscatter. A technical benefit may include simplicity of implementation of the detection.

Optionally in some examples, including in at least one preferred example, the difference between the expected ground surface backscatter and the measured backscatter may indicate one or more of: a distance from the radar transceiver to the ground surface height variation, and an angular orientation relative the radar transceiver of the ground surface height variation. A technical benefit may include that useful information regarding the ground surface height variation is provided.

Optionally in some examples, including in at least one preferred example, the method may further comprise causing (by the processing circuitry) a safety enhancing action responsive to detection of the ground surface height variation. A technical benefit may include that ground surface height variation may be adequately handled in the vehicle control process, which may enable reduction of accidents and vehicle damage/wear while not unnecessarily limiting the vehicle operation.

According to a fourth aspect of the disclosure, a computer program product is provided, which comprises program code for performing, when executed by the processing circuitry, the method of the third aspect.

According to a fifth aspect of the disclosure, a non-transitory computer-readable storage medium comprising instructions is provided, which when executed by the processing circuitry, cause the processing circuitry to perform the method of the third aspect.

The fourth and/or fifth aspect of the disclosure may seek to convey program code for enabling or improving detection of ground surface height variation in the vicinity of a vehicle. A technical benefit may include that new vehicles and/or legacy vehicles may be conveniently configured, by software installation/update, to acquire measured backscatter from a radar transceiver mounted on the vehicle and directed at the ground surface, compare the measured backscatter to expected ground surface backscatter according to a current vehicle motion, and detect a ground surface height variation responsive to a difference between the expected ground surface backscatter and the measured backscatter satisfying a detection criterion.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is a flowchart illustrating a method according to some examples.

FIG. 2 is a schematic drawing illustrating a vehicle according to some examples.

FIG. 3 is a collection of schematic drawings illustrating vehicles and some radar system parameters according to some examples.

FIG. 4 is a plot illustrating a power distribution according to some examples.

FIG. 5 is a plot illustrating relationships between radial velocity and radial distance according to some examples.

FIG. 6 is a collection of plots illustrating backscatter in absence and presence of a ground surface height variation according to some examples.

FIG 7 is a collection of schematic drawings illustrating respective vehicles and a corresponding ground surface height variation according to some examples.

FIG. 8 is a collection of plots illustrating backscatter in absence and presence of a ground surface height variation according to some examples.

FIG. 9 is a schematic diagram illustrating a computer system for implementing examples disclosed herein according to some examples.

FIG. 10 is a schematic drawing illustrating a computer program product in the form of a non-transitory computer-readable storage medium according to some examples.

FIG. 11 is a schematic block diagram of a control unit according to some examples.

## DETAILED DESCRIPTION

The detailed description set forth below provides information and examples of the disclosed technology with sufficient detail to enable those skilled in the art to practice the disclosure.

As already mentioned, there is a need for alternative approaches for detection of ground surface height variation in the vicinity of a vehicle. This is addressed by the current disclosure.

According to some examples, the approaches described herein may improve existing detection of ground surface height variation in the vicinity of a vehicle. For example, additional information regarding ground surface height variation may be provided by the approaches described herein. Alternatively or additionally, the operator may not be required to step out of the vehicle to obtain information regarding ground surface height variation when the approaches described herein are applied. Yet alternatively or additionally, when the approaches described herein are applied, information regarding ground surface height variation may be provided even if a camera view is obstructed. Yet alternatively or additionally, information regarding ground surface height variation as provided by the approaches described herein may be less challenging to interpret in terms of spatial information than some visual images. According to some examples, the information regarding ground surface height variation as provided by the approaches described herein may be combined with information obtained through visual inspection (e.g., to improve extraction of spatial information and/or to highlight ground surface height variation in a visual image rendered via a user interface).

Generally, the term "ground surface height variation" is meant to encompass any height variation of the ground surface, as suitable (e.g., an edge, or a gradual decline/incline). A ground surface height variation may, for example, refer to a deviation from a (substantially) horizontal plane. Alternatively or additionally, a ground surface height variation may refer to a deviation from a plane on which the wheels of the vehicle rests. In some examples, a ground surface height variation is defined as a deviation from a suitable plane, wherein the deviation exceeds a height variation threshold. Typical examples of interesting ground surface height variations include (but are not limited to) cliff edges and other drop-offs, pot-holes, speed bumps, sidewalk edges, edges of refuges and other road partitions, etc.

Also generally, the term "vicinity" may be interpreted in any suitable way. For example, the vicinity of a vehicle may refer to anything within a specified distance from the vehicle. The distance may be static or dynamic (e.g., increasing with increasing vehicle speed). Alternatively or additionally, the vicinity of a vehicle may refer to locations from which a radar transceiver mounted on the vehicle can receive backscatter when there is a surface present at the location.

A radar transceiver generally comprises a radar signal generator, at least one transmit antenna, at least one receive antenna, and a radar backscatter detector. The radar transceiver transmits a radar signal generated by the radar signal generator via the at least one transmit antenna. The transmitted signal interacts with the environment and is partly reflected back towards the at least one receive antenna. This part of the radar signal is referred to herein as radar signal backscatter, or just backscatter. The backscatter is detected by the radar backscatter detector. Radar transceivers, and their operation, are generally known and will therefore not be discussed in more detail herein.

WO2023169652A1 describes a ground radar system comprising radar transceivers applicable for the techniques described herein.

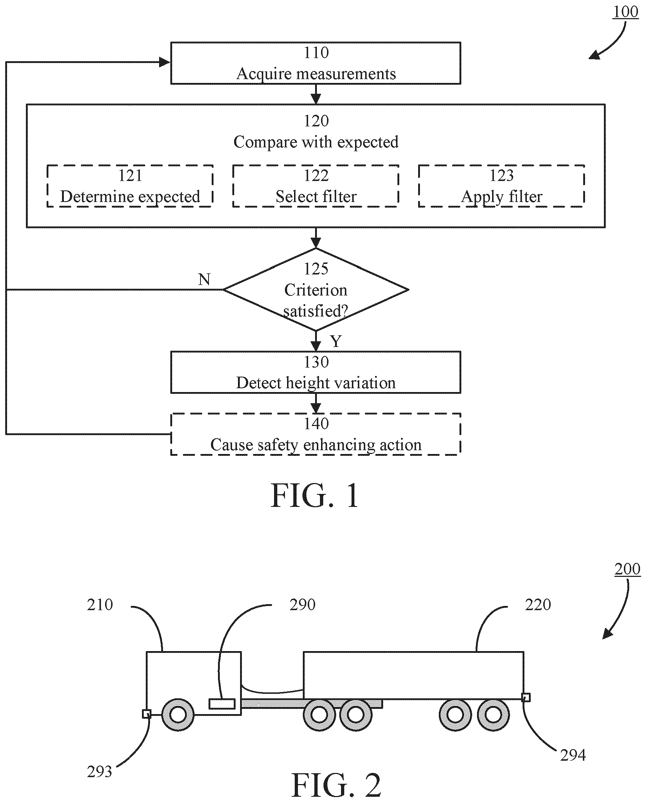

FIG. 1 illustrates an example computer-implemented method 100 for detection of ground surface height variation in the vicinity of a vehicle.

As illustrated by 110, measured backscatter is acquired from a radar transceiver which is mounted on the vehicle and directed at the ground surface.

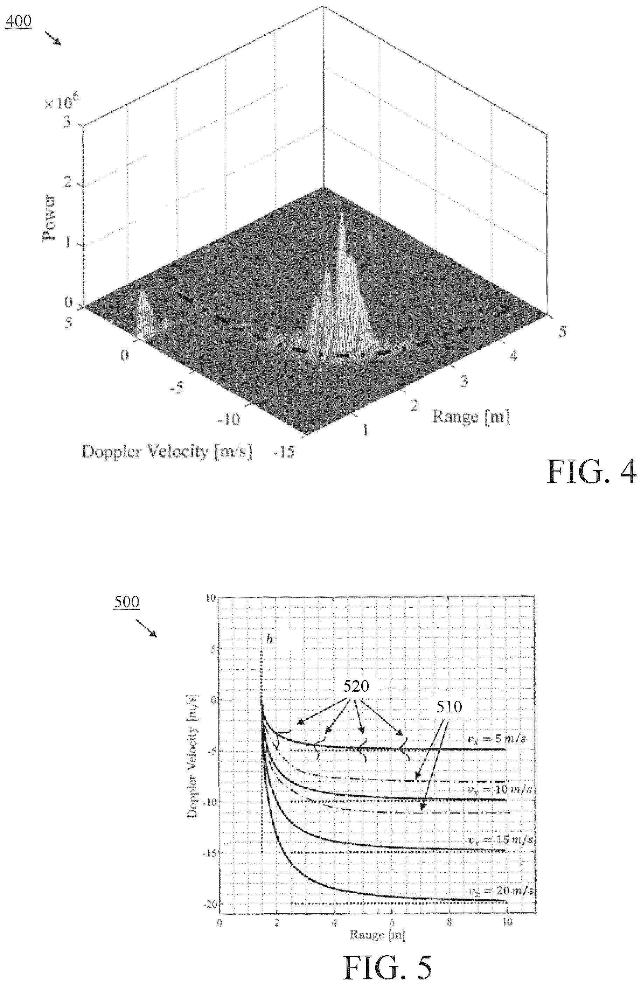

It is appreciated that the measured backscatter can be acquired in several different ways. According to some examples, the backscatter is acquired as raw signal data such as complex-valued samples of in-phase (I) and quadrature (Q) components of the reflected radar signal from an analog-to-digital converter (ADC). According to some examples, the backscatter is acquired as range and/or velocity data indicative of the range and/or the velocity to objects in the environment that are reflecting the transmitted radar signal. A range-Doppler map is a representation comprising received signal power for different ranges and different relative radial velocities. According to some examples, the backscatter is acquired as range-Doppler maps. Example range-Doppler maps are illustrated in **FIGs. 4-6** and will be discussed in more detail below. A range-Doppler map may also be referred to as a space spanned by radial velocity of the radar transceiver relative to the ground surface and by radial distance of the radar transceiver from the ground surface.

Thus, generally, the measured backscatter can comprise the actual signal received by the radar transceiver (e.g., represented by raw I/Q signal data), and/or the measured backscatter can comprise some more sophisticated representation of the environment that causes the backscatter to occur by reflection (e.g., a range-Doppler map) which is derived from the actual signal received by the radar transceiver.

The measured backscatter is compared to expected ground surface backscatter, as illustrated by **120.** As illustrated by **121,** the method **100** may (optionally) comprise determining the expected ground surface backscatter according to the current vehicle motion (as part of, or prior to, the comparison **120**).

The expected ground surface backscatter is backscatter as expected according to a current vehicle motion; typically assuming a planar ground surface. Expected ground surface backscatter typically refers herein to characteristics such as delay, amplitude, and frequency shift of the part of the transmitted radar signal that is reflected by the environment and received at the radar transceiver, as discussed above. For example, the current vehicle motion may comprise vehicle velocity over the ground surface in a direction corresponding to a facing direction or boresight direction of the radar transceiver. Thus, for front-facing and back-facing radar transceivers, the current vehicle motion may be a current longitudinal speed of the vehicle.

Information regarding the current vehicle motion may be acquired in any suitable way (e.g., as known in the art). For example, the current vehicle motion may be estimated based on any suitable combination of wheel speed sensor data, steering angle information, positioning data (e.g., global navigation system data), etc. Alternatively or additionally, information regarding the current vehicle motion may be implicitly or explicitly available from the acquired backscatter itself (e.g., as explained in WO2023169652A1).

Comparing **120** the measured backscatter to the expected ground surface backscatter may (optionally) comprise applying a suitable filter to the measured backscatter, as illustrated by **123,** wherein the filter represents one or more characteristics of the expected backscatter. In some examples, comparing **120** the measured backscatter to the expected ground surface backscatter may (optionally) also comprise selecting a filter from a plurality of available filters, as illustrated by **122,** based on the current vehicle motion. For example, for each of a collection of vehicle velocities in a facing direction or boresight direction of the radar transceiver, the plurality of available filters may comprise a suitable filter. Alternatively or additionally, the filter may be constructed (i.e., derived) on demand, using one or more mathematical models or functions such as polynomial functions, piecewise linear approximations, and the like.

After **120,** it is checked whether or not a difference between the expected ground surface backscatter and the measured backscatter satisfies a detection criterion, as illustrated by **125.** If the detection criterion is satisfied (Y-path out of **125**), the method continues to **130.** If the detection criterion is not satisfied (N-path out of **125**), the method returns to **110,** where new measurements are acquired.

As illustrated by **130,** a ground surface height variation is detected responsive to the difference between the expected ground surface backscatter and the measured backscatter satisfying the detection criterion.

Put differently, the system transmits radar signal towards the ground surface and monitors the resulting backscatter from the ground surface. The system, having regard to (e.g., the nominal height of the radar transceiver over the ground surface and the current velocity of the vehicle over the surface) expects a certain type of radar backscatter. The detection criterion is fulfilled if the expected ground surface backscatter differs enough from the measured backscatter; then it is likely that the ground surface has a height variation which has caused the discrepancy.

As illustrated by **140,** the method **100** may (optionally) comprise causing (e.g., performing) a safety enhancing action responsive to detection of the ground surface height variation. The safety enhancing action may be any one or more suitable action.

For example, causing a safety enhancing action may comprise issuing a warning for an operator of the vehicle. The warning may take any suitable form (e.g., visual, audial, tactile, etc.). In some examples, the warning may be issued by rendering a representation of the detected ground surface height variation via a user interface (e.g., overlaid on a camera image).

Alternatively or additionally, causing a safety enhancing action may comprise applying velocity constraints (e.g., halting the vehicle, slowing down the vehicle, hindering the vehicle from exceeding a velocity limit, etc.).

Yet alternatively or additionally, causing a safety enhancing action may comprise issuing an alert for an autonomous drive function of the vehicle.

Yet alternatively or additionally, causing a safety enhancing action may comprise sending a report to a remote vehicle service function. For example, the report may comprise information regarding the detected ground surface height variation (e.g., location, orientation, shape, height difference, etc.). Such information may be used by the remote vehicle service function, for example, to create/update a ground surface height variation database which can be used to inform/control vehicles in the relevant location going forward.

Finally, the method may return to **110,** where new measurements are acquired. It should be noted that, in some examples, new measurements are acquired in and compared to expected backscatter in parallel to execution of **125, 130, 140.**

In some examples, the measured backscatter (and the expected backscatter) comprises a signal power distribution in a space spanned by radial velocity of the radar transceiver relative to the ground surface and by radial distance of the radar transceiver from the ground surface. The radial velocity may be expressed in terms of Doppler shift between a transmitted radar signal and the correspondingly received radar signal (as reflected by the ground surface). The radial distance may be implied by the delay between transmission of a radar signal and reception of the correspondingly reflected radar signal.

Typically, the expected ground surface backscatter indicates an expected shape in the space spanned by radial velocity of the radar transceiver relative to the ground surface and by radial distance of the radar transceiver from the ground surface. To this end, the applicable (e.g., selected) filter of **122** and **123** may be a spatial filter that corresponds to the expected shape. For example, applying **123** the spatial filter to the measured backscatter may comprise applying a mask to the measured backscatter, where the mask passes signal power at radial velocity - distance coordinate points belonging to the expected shape, and blocks any other signal power. Alternatively or additionally, a weighting filter may be applied, which emphasizes signal power near the expected radial velocity (distance coordinate points belonging to the expected shape).

When the backscatter comprises signal power distribution as a function of radial distance (e.g., signal power distribution in a space spanned by radial velocity and distance), the detection criterion may comprise that the signal power profile of the measured backscatter as filtered (based on the expected backscatter) has a more prominent power decrease (when the height variation is a height decrease, such as an edge or drop-off) with radial distance than the corresponding signal power profile of the expected ground surface backscatter (i.e., a difference between the expected ground surface backscatter and the measured backscatter).

The prominence of the power decrease may be expressed in any suitable way. For example, there may be a step-like decrease in power for the measured backscatter which has no counterpart in the expected backscatter. Thus, that the signal power profile of the measured backscatter as filtered has a more prominent power decrease with radial distance than the corresponding signal power profile of the expected ground surface backscatter is meant to include the case where the signal power profile of the measured backscatter as filtered has zero (or very close to zero) power for radial distances longer than a cut-off distance. Put differently, the term "power decrease" is meant to include abrupt cessation (a cut-off) of power at a cut-off distance (i.e., that the signal disappears for radial distances above the cut-off power). Alternatively or additionally, there may be a gradual decrease in power for the measured backscatter which has a steeper slope than any counterpart in the expected backscatter. Yet alternatively or additionally, there may be a decrease in power for the measured backscatter which is relatively larger than any counterpart in the expected backscatter.

Generally, the signal power profile of the measured backscatter as filtered having a more prominent power decrease with radial distance than the corresponding signal power profile of the expected ground surface backscatter may include any one or more suitable situation(s) where the backscatter power becomes weaker (abruptly or gradually) with increasing radial distance.

According to some examples, the measured backscatter may have zero signal power for radial distances that are longer than some cut-off distance, while the expected backscatter has non-zero signal power for radial distances that are shorter than the cut-off distance. According to some examples, a signal power ratio between the measured backscatter and the expected backscatter may have a lower value for radial distances that are longer than some cut-off distance, than for radial distances that are shorter than the cut-off distance. According to some examples with signal power ratio between the measured backscatter and the expected backscatter, a difference between the signal power ratio for radial distances that are shorter than some cut-off distance and the signal power ratio for radial distances that are longer than the cut-off distance exceeds a threshold value, or fulfills another suitable criterion.

Thus, when the backscatter comprises signal power distribution in a space spanned by radial velocity and distance, the expected backscatter may be determined **121** and/or a suitable filter may be selected **122** by identifying an expected shape in the space spanned by radial velocity of the radar transceiver relative to the ground surface and by radial distance of the radar transceiver from the ground surface (e.g., by matching the measured backscatter for relatively short radial distances to one of several known shapes for planar ground surface corresponding to different vehicle velocities). Comparing **120** the measured backscatter to the expected backscatter may comprise applying **123** a spatial filter that corresponds to the expected shape, and the detection criterion **125** may comprise that the signal power profile of the measured backscatter as filtered has a prominent power decrease with radial distance (e.g., a cut-off) which has no correspondence in the expected backscatter.

Generally, the detection may include determination of location and/or orientation and/or shape of the ground surface height variation. For example, the difference between the expected ground surface backscatter and the measured backscatter may indicate a distance from the radar transceiver to the ground surface height variation and/or an angular orientation relative the radar transceiver of the ground surface height variation, from which location and/or orientation and/or shape of the ground surface height variation can be derived (e.g., in relation to the vehicle).

When the backscatter comprises signal power distribution in a space spanned by radial velocity and distance, the radial distance where the measured backscatter declines more prominently than the expected backscatter indicates the distance from the radar transceiver to the ground surface height variation. An inclination in the velocity-distance plane of a line representing the decline indicates an angular orientation relative the radar transceiver of the ground surface height variation.

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner. The tractor unit **210** and/or the trailer unit(s) **220** may comprise a vehicle control unit (VCU) **290** configured to perform various vehicle control functions, such as vehicle motion management (VMM), etc. Any of one or more VCU(s) **290** may be configured to perform, or cause performance of, the techniques disclosed herein. For example, the VCU **290** may be configured to perform the method **100** of **FIG. 1.**

Mounted on the vehicle **200,** there are radar transceivers **293, 294** directed at the ground surface and configured to provide measured backscatter. For example, there may be at least one forward-facing radar transceiver **293** and/or at least one backward-facing radar transceiver **294.** In some examples, there may - additionally or alternatively - be radar transceiver(s) facing other directions than forward/backward, which may enable ground surface height variation detection also in such directions. In some examples, there may be two or more radar transceivers facing (substantially) the same direction, which typically enhances the ground surface height variation detection in that direction.

Thus, the vehicle **200** is equipped with a radar sensor system comprising one or more radar transceivers **293, 294** arranged to transmit respective radar signals and to receive radar signal backscatter from the environment in vicinity of the radar transceiver, in particular from the surface supporting the vehicle.

The radar sensor system transceivers **293, 294** are directed at the ground surface and can therefore be used to determine a speed over ground of the vehicle in a reliable manner. A ground speed radar module **293, 294** can be configured to determine a one dimensional velocity of the vehicle, such as the longitudinal velocity $v_x$ of the vehicle over the ground surface, a two-dimensional velocity vector $[v_x, v_y]$ or a three-dimensional velocity vector $[v_x, v_y, v_z]$ of a vehicle with respect to a surface supporting the vehicle, where the orientation of the x, y and z axes used in the present disclosure represent longitudinal, lateral, and vertical coordinates in a vehicle centric system. The radar system on the vehicle can, generally, be used to determine one or more motion parameters of the vehicle such as vehicle unit speed ($v_x, v_y, v_z$), vehicle unit acceleration ($a_x, a_y, a_z$), vehicle unit pitch angle ($\varphi_y$), vehicle unit roll angle ($\varphi_x$), vehicle unit pitch motion ($\omega_y$), vehicle unit roll motion ($\omega_x$), and vehicle unit yaw motion ($\omega_z$). The radar system on the vehicle can also be used to determine vehicle unit heave, i.e., the vehicle unit height along the z-axis over the ground surface.

Many of the methods and functions discussed herein rely on data obtained from the one or more radar transceivers **293, 294.** The VCU **290** or VCUs may be communicatively coupled to processing circuitry integrated with the radar transceivers **293, 294.** Some VCUs discussed herein may also comprise hardware for generating, transmitting and/or receiving radar signals. This disclosure is not limited to any particular VCU hardware architecture, nor any particular radar transceiver architecture.

The principle of determining motion parameters of the vehicle **200** using the radar transceivers **293, 294** builds on the disclosure of, e.g., US 2004/0138802 and other known ground speed radar systems, such as the systems disclosed in WO2023169746 A1. Methods of varying complexity can be applied to determine vehicle motion parameters by analyzing radar backscatter from the surface supporting the vehicle. Such methods are known and will not be discussed in detail herein.

Some example approaches for robust radar-based vehicle motion estimation will now be explained, along with their application to detection of ground surface height variations.

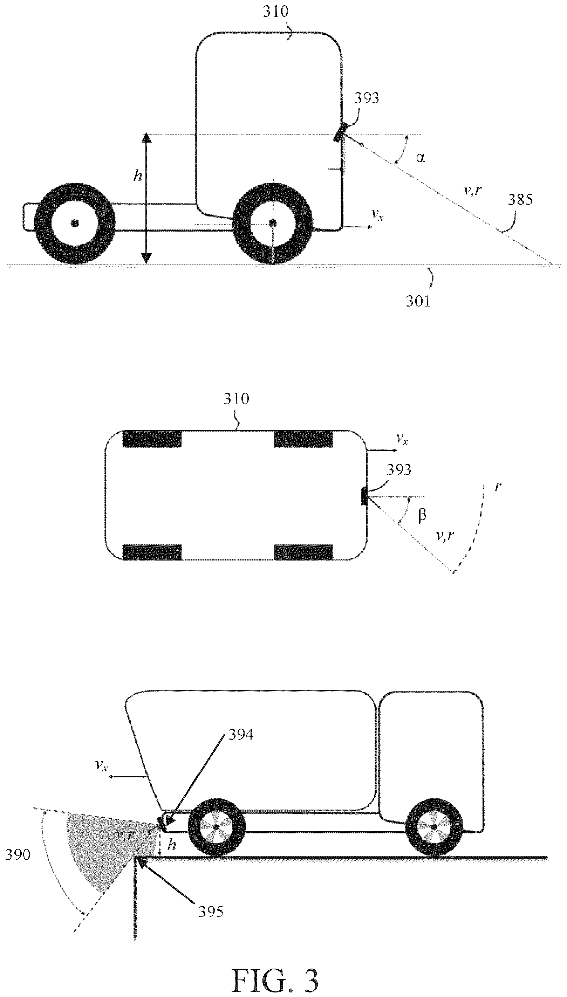

**FIG. 3** schematically illustrates vehicles and some radar system parameters according to some examples.

With reference to the somewhat simplified example in the uppermost drawing of **FIG. 3,** suppose that the truck **310** moves in its longitudinal direction along the x-axis, and let $v_x$ denote the longitudinal velocity with respect to the surface **301** along this axis. Let h define the position of the radar sensor **393** with respect to the ground. The ground **301** moves at a radial velocity v relative to the radar transceiver **393.** Radial velocity will often be referred to herein as the Doppler velocity, and the two terms can be used interchangeably.

The distance from the radar transceiver **393** to a point in the area on the surface illuminated by the radar transceiver is r. The radial velocity v and the range (radial distance) r, along an observation direction **385** with an elevation angle $\alpha$ can be expressed as

7

$$v = -cos(\alpha)\, v_x \qquad (1)$$

$$r = \frac{1}{\sin(\alpha)}(h) \qquad (2)$$

The observation direction may, e.g., be the boresight direction of the radar transceiver, i.e., the direction of maximum antenna gain in a single main lobe radar transceiver, or some other direction. It is noted that both of these observations are functions of the elevation angle $\alpha$, which can be regarded as an implicit variable.

The middle drawing of **FIG. 3** shows a top view of an example vehicle unit **310** with a radar transceiver **393**. In this case the radar beam is also angled laterally at an azimuth angle $\beta$ in addition to the elevation angle $\alpha$, while the range to the illuminated surface area is kept the same as indicated by the dashed line. For an observation direction with an elevation angle $\alpha$ and an azimuth angle $\beta$, the range and radial velocities are given as

$$v = -cos(\alpha)\, cos(\beta)\, v_x \qquad (3)$$

$$r = \frac{1}{\sin(\alpha)}(h) \qquad (4)$$

With reference to the somewhat simplified example in the lowermost drawing of **FIG. 3,** suppose that the truck reverses in its longitudinal direction along the x-axis, and let $v_x$ denote the (negative) longitudinal velocity with respect to the ground surface along this axis. Let $h$ define the shortest distance between the radar sensor **394** and the ground surface. The principles for this backward-facing example are the same as explained for the forward-facing example. Thereby, an edge **395** in the ground surface may be detected since the backscatter for the angular interval **390** has substantially lower power (if any) than if the ground surface would be planar (i.e., would not have the edge **395**).

The radar transceiver **293, 294, 393, 394** generally illuminates an area on the road surface and not a localized small point, since the radar beam is normally not a true laser-like or pencil-shaped beam. Thus, even single-beam radar transceivers simultaneously collect radar backscatter from different observation directions due to the spread of the main radar transmission lobe, i.e., due to the shape of the main lobe of the radar transceiver antenna including effects of, e.g., the radar front end on the overall transmission pattern of the radar transceiver. The extent of the spread depends mainly on the antenna characteristics of the radar transceiver but also the reflection properties of the environment and the vehicle components in the near-field of the radar transceiver. This means that there will be a spread in elevation angles in the transmitted radar signal, and also in the received radar backscatter, where an area of the road surface has been illuminated with varying degree of intensity, from some range $r_1$ at corresponding elevation angle $\alpha_1$ to a range $r_2$ at elevation angle $\alpha_2$. The largest received radar backscatter power is most likely received from the boresight direction, at least on average. The average received signal power then declines with elevation angle from the elevation angle of the radar transceiver boresight direction in a known manner.

By letting $\alpha$ and/or $\beta$ vary over some predetermined span, such as between a small angle corresponding to a maximum range and an angle close to perpendicular to the ground surface, Doppler $v$ is obtained as function of range $r$, since each $\alpha$ and/or $\beta$ gives a tuple ($v, r$). The equations (1-4) can thus be used to determine an expected range-Doppler appearance of received radar backscatter from the ground surface, given an expected or predicted vehicle motion and a radar transceiver geometry.

In essence, this means that a range-Doppler map of the received radar backscatter, i.e., a data set indicating the different ranges and radial velocities at which radar backscatter energy has been detected by the radar transceiver **293, 294, 393, 394,** will exhibit a curved banana-like shape.

An example range-Doppler power spectrum **400** from a real-world radar transceiver is illustrated in **FIG. 4** (signal power distribution in a space spanned by radial velocity and radial distance) , where the expected range-Doppler appearance is indicated by a dash-dotted line. Here the impact from the antenna diagram can be seen as a variation in received radar backscatter power. The antenna boresight direction is in this case somewhere close to the peak of the power of the received backscatter. The artefact at zero range and zero Doppler is most likely due to near-field effects, i.e., objects close to the antenna. This power spectrum is likely to vary over time since it is impacted by the radar reflection properties of the surface and also at least to some extent by the radar transceiver front end.

In the example range-Doppler map **500** in **FIG. 5,** some expected range-Doppler appearances of received radar backscatter has been plotted for different vehicle longitudinal velocities $v_x$. Thus, **FIG. 5** illustrates some expected shapes as relationships between radial velocity and radial distance, where the current vehicle motion is represented by the velocity $v_x$ over the ground surface in a direction corresponding to a facing direction or boresight direction of the radar transceiver.

The radar is not able to observe the ground for the elevation angles $\alpha > \frac{\pi}{2}$ as the vehicle body obstructs the field of view.

Note that the banana-like curves all start at a range corresponding to the height of the radar transceiver over ground which corresponds to a direction more or less perpendicular to the ground, where radial (Doppler) velocity is close to zero as expected. The curves all converge to the longitudinal velocity of the vehicle, which happens as the azimuth angle (and thus also the distance $r$) becomes large, at least when $\alpha$ and $\beta$ are small.

To summarize, the characteristic behavior of ground surface radar backscatter as function of radar system geometry and vehicle motion can be leveraged in order to provide improved vehicle motion estimation, i.e., to improve the determination of one or more motion parameters on a vehicle, and also to determine or refine data related to radar system geometry on a vehicle, such as the height over ground of the radar transceiver, or its boresight angle relative to the surface supporting the vehicle. Having some idea of the current motion of a vehicle, such as its approximate longitudinal velocity, and the geometry of the radar system arranged on the vehicle, an expected range-Doppler appearance of the received backscatter from a given radar transceiver can be determined. This expected range-Doppler appearance can then be used to define a filter **510, 520** that can be applied to the received backscatter from the radar transceiver. Such filters may also be used as spatial filters for application to the measured backscatter, wherein the spatial filter corresponds to an expected shape.

The expected range-Doppler appearance can be determined analytically, e.g., by varying $\alpha$ and $\beta$ in equation (3) and (4) above to get pairs of range and radial velocities which constitute the expected range-Doppler appearance. There are, however, also other ways to determine the expected range-Doppler appearance given a certain vehicle motion over the surface supporting the vehicle. One such method is an experimental method where the vehicle is moved over the surface at a known motion state (known velocity, etc.) and the range-Doppler appearance is recorded a few times, averaged, and then stored in a database indexed by vehicle motion state. This database can then be consulted if an expected range-Doppler appearance for a given motion state is wanted.

An expected range-Doppler appearance can, according to the teachings herein, be formatted in different ways. According to one example the expected range-Doppler appearance is formatted as a curve in the range-Doppler plane, i.e., as a function $v = f(r)$. According to another example the expected range-Doppler appearance is a discrete set of magnitudes indexed by range $r$ and by velocity $v$, i.e., similar to a fast Fourier transform based discrete range-Doppler map obtained from a radar transceiver. According to yet another example the expected range-Doppler appearance is a continuous three-dimensional function which indicates expected power (possibly with phase) over range $r$ and velocity $v$.

The expected range-Doppler appearance can be used by the one or more VCUs on the vehicle to define one or more range-Doppler filters and signal processing functions that can be applied to the range-Doppler data obtained from the one or more radar transceivers. Suppose that the range-Doppler data set is indexed by range $r$ and by radial velocity $v$, such that $P_{r,d}$ is the received signal power in the radar backscatter corresponding to a range $r$ and a radial velocity $v$. The power $P_{r,d}$ may be just a magnitude or an amplitude with corresponding relative phase value.

**FIG. 5** illustrates a first example filter **510** applied to the $v_x = 10 m/s$ curve. This filter is a gating filter (which can be used for masking the measured backscatter) which will suppress all signal energy outside of the dash-dotted lines. This, interference from foreign objects on the road surface such as water spray, mud, snow, or obstacles on the road surface will be suppressed and thus not distort the estimation of vehicle speed over ground. The gating filter can, for instance, be defined as a region around the expected range-Doppler appearance defined by offsetting the expected range-Doppler appearance curve by a predetermined amount in the Doppler-direction.

Suppose for instance that $P_{r,d}$ is the received signal power in the radar backscatter corresponding to a range r and a radial velocity $v$ in some radar system. The gating function will then zero out all received radar backscatter power if the coordinate in the range-Doppler map, i.e., $(v, r)$ lies outside of the gating region, leaving only the received radar backscatter power at coordinates in the range-Doppler map that lie inside of the gating region.

This type of gating filter can be used to pre-process that radar data obtained from the radar transceivers in, e.g., US 2004/0138802 A1 and/or in WO2023169746 A1, and also in the other ground-speed radar system known in the art.

**FIG. 5** also illustrates a second example filter **520**. This filter is instead a weighting filter that applies larger weights to received radar backscatter power close to the expected appearance of the road surface, i.e., close to the banana-like curve, and smaller weights to received radar backscatter further away from the expected appearance. This will again emphasize radar backscatter that has likely resulted from reflection at the road surface and suppress of radar backscatter which may otherwise distort the estimation of vehicle motion relative to the road surface. The weights can, for instance, be determined function that declines in a direction perpendicular to the expected range-Doppler appearance curve. The decline may, e.g., be according to a second-order expression, a sine function, or an exponential decline. The decline in the weight function may also be linear.

Suppose again that $P_{r,d}$ is the received signal power in the radar backscatter corresponding to a range r and a radial velocity $v$ in some radar system. The weighting function will then apply large magnitude weights to all received radar backscatter power at coordinates $(v, r)$ close (in Euclidean distance or by some other distance metric) to the expected range-Doppler appearance curve, and smaller weights to received radar backscatter power at coordinates ($v$, $r$) further away from the expected range-Doppler appearance curve.

This type of weighting filter can be used to pre-process that radar data obtained from the radar transceivers in, e.g., US 2004/138802 A1 and/or in WO2023169746 A1, and also in the other ground-speed radar system known in the art.

The expected range-Doppler appearance is, generally, a function $f_{G,M}(r, v)$ that is parameterized by the radar system geometry $G$ and the current vehicle motion $M$ (such as the position of the radar transceiver on the vehicle and the speed of the vehicle over the surface 101). Given a radar system geometry $G$ and a current vehicle motion $M$, it is possible to plot what the radar backscatter is expected to look like in the range-Doppler domain. The expected range-Doppler appearance function $f_{G,M}(r, v)$ can be given in magnitude only, or in amplitude and phase, just like any range-Doppler map.

According to one example application, the expected range-Doppler appearance function $f_{G,M}(r, v)$ can be used to define a weighting function which emphasizes backscatter power $P_{r,d}$ where backscatter power is expected according to the function $f_{G,M}(r, v)$, while suppressing backscatter power at other parts in the range-Doppler map. In other words, received radar backscatter power at index ($r$, $d$) from the radar transceiver can be processed as

$$P_{r,d}{}^{proc} = w(r, d)P_{r,d}$$

where $w(r, d)$ is a weight determined from the magnitude of the function $f_{G,M}(r, v)$. In case the weights are binary (either zero or one), the filter will be a gating filter which rejects radar backscatter power too far from the expected range-Doppler appearance curve. The weights $w(r, d)$ are preferably also configured so as to account for uncertainty in the radar system geometry $G$ and/or in the current vehicle motion $M$. The more accurate the information on $G$ and $M$ the steeper the weights can decline from the most likely expected radar backscatter curve, and vice versa. In case of large uncertainty in the radar system geometry $G$ and/or in the current vehicle motion $M$ a set of uniform weights may be used, which will not result in any suppression of radar backscatter power in the range-Doppler map.

The signal power distribution in a space spanned by radial velocity and radial distance (compare with **FIGs. 4-5**) may be used for detection of ground surface height variations, as will be exemplified in the following.

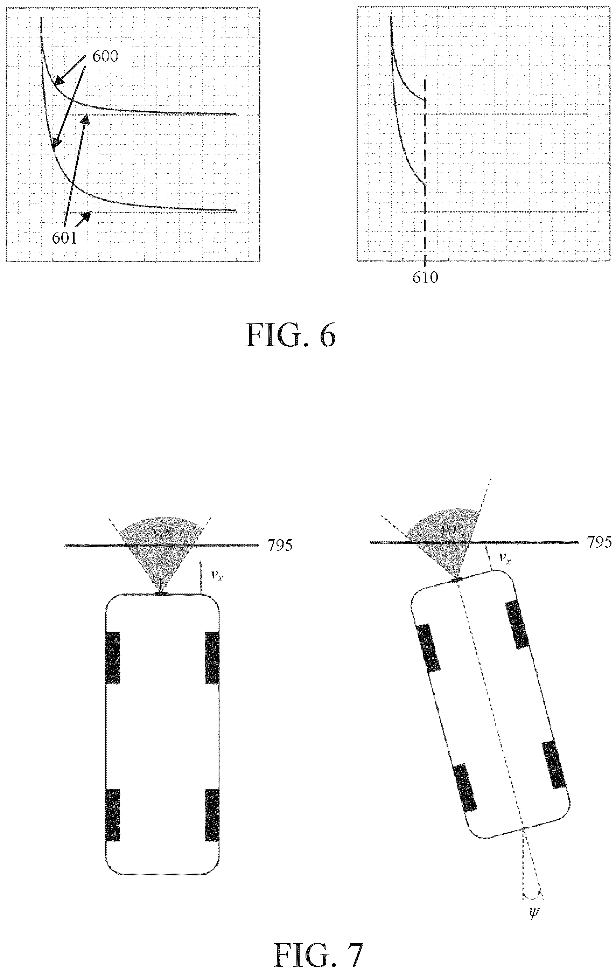

FIG. 6 schematically illustrates backscatter **600** corresponding to equations (1-2) for two different velocities (each velocity represented by one of the two lines **601**) in absence of ground surface height variations (left plot) and in presence of a ground surface height variation (right plot). The cut-off **610** of the measured backscatter in the right plot (compared to the expected backscatter in the left plot) indicates that there is indeed a ground surface height variation and its distance from the radar transceiver. The cut-off **610** exemplifies that the signal power profile of the measured backscatter as filtered has a more prominent power decrease with radial distance than the corresponding signal power profile of the expected ground surface backscatter. More generally, there may be a step-like power decrease (cut-off, abrupt cessation) or a gradual decrease, as explained above.

FIG 7 schematically illustrates a vehicle approaching an edge **795** in the ground surface at a right angle (left illustration) and at an offset angle $\Psi$ (right illustration). It would be beneficial to be able to distinguish between these situations, and to be able to determine the angle $\Psi$.

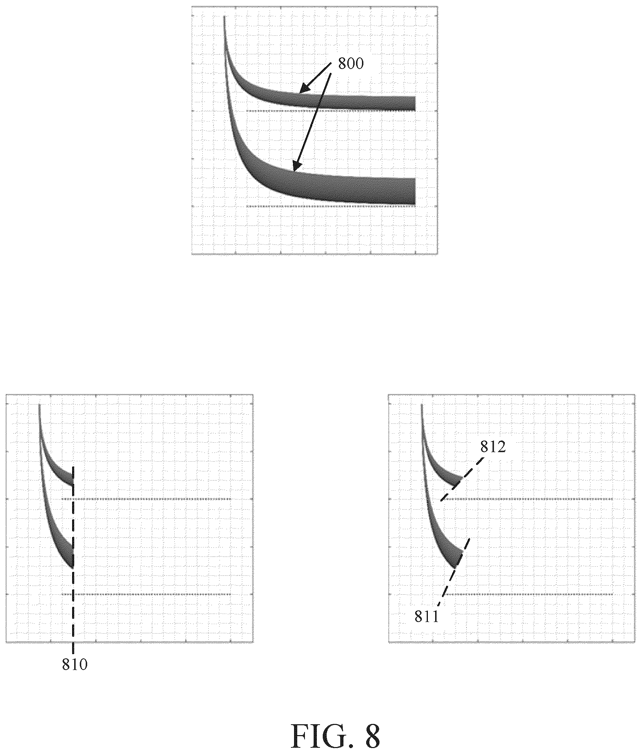

FIG. 8 schematically illustrates backscatter **800** for two different velocities (compare with **601** of **FIG. 6**) and corresponding to equations (3-4); i.e., using variation in both $\alpha$ and $\beta$. In the uppermost plot, the backscatter **800** is shown in absence of ground surface height variations. It should be noted that each of the two expected shapes has a relatively substantial width (compare with **600** of **FIG. 6**) which is due to the dual parametrization of both $\alpha$ and $\beta$.

In the lowermost left plot, the backscatter is shown in presence of ground surface height variations while approaching an edge at a right angle. As for the example in **FIG. 6,** the cut-off **810** of the measured backscatter indicates that there is indeed a ground surface height variation and its distance from the radar transceiver.

In the lowermost right plot, the backscatter is shown in presence of ground surface height variations while approaching an edge at an offset from the right angle. It should be noticed that the cut-offs **811, 812** are not vertical (as the cut-off **810**). From the inclination of lines representing the cut-offs, an angular orientation relative the radar transceiver may be determined for the edge (e.g., by mapping the inclination to a corresponding angle for the applicable velocity).

The cut-offs **810, 811, 812** exemplify that the signal power profile of the measured backscatter as filtered has a more prominent power decrease with radial distance than the corresponding signal power profile of the expected ground surface backscatter. More generally, there may be a step-like power decrease (cut-off, abrupt cessation) when the backscatter **800** meets the lines **810, 811, 812** or a gradual decrease, as explained above. Thus, when there is a step-like power decrease in cases such as that of the lowermost right plot, the power is cut-off at different radial distances for different Doppler velocities, as represented by the non-vertical lines **811, 812.**

Put differently, the signal power cut-off is manifested as a straight line in the space spanned by radial velocity of the radar transceiver relative to the ground surface and by radial distance of the radar transceiver from the ground surface, wherein the orientation of the straight line indicates an angle of the ground edge relative the direction that the radar transceiver is facing.

When the cut-off corresponds to a straight line as in **FIG. 8,** the edge may substantially correspond to a straight line (perpendicular or not to the facing direction or boresight direction of the radio transceiver). If the cut-off corresponds to a different shape, conclusions may be drawn regarding a corresponding shape of the ground surface height variation (e.g., a curved edge).

As already mentioned, the approaches described herein may improve existing detection of ground surface height variation in the vicinity of a vehicle. This advantage may be achieved, for example, by comparing the measured backscatter to the expected ground surface backscatter subject to the expected shape, as explained above. Using the expected shape, it is possible to improve noise suppression (e.g., removing as much noise as possible without suppressing the information carrying portions of the measured backscatter). Thus, the sensitivity to noise may be reduced and/or the collected backscatter signal energy may be increased. According to some examples, approaches described herein may be seen as a form of matched filter detection.

In some examples, the principles described and exemplified herein may be combined with one or more other height variation detection approach (e.g., camera).

For example, the result of detection by radar transceiver may be fused with the result of detection by camera (e.g., averaging, weighting, binary "OR", etc.). The respective results may be binary (radar = edge or not, camera = edge or not), or a soft value (e.g., indicating uncertainty of the result). In the latter case, the uncertainty may be used to set weighting values (uncertain result to have less influence on the combination).

Alternatively or additionally, the result of detection by radar transceiver and the result of detection by camera may be used separately (e.g., one providing redundancy when the other is non-functional). For example, radar may be more reliable than camera if there are obstructions (e.g., dust, mud, snow) or lack of light, while camera may be more reliable than radar in rainy conditions.

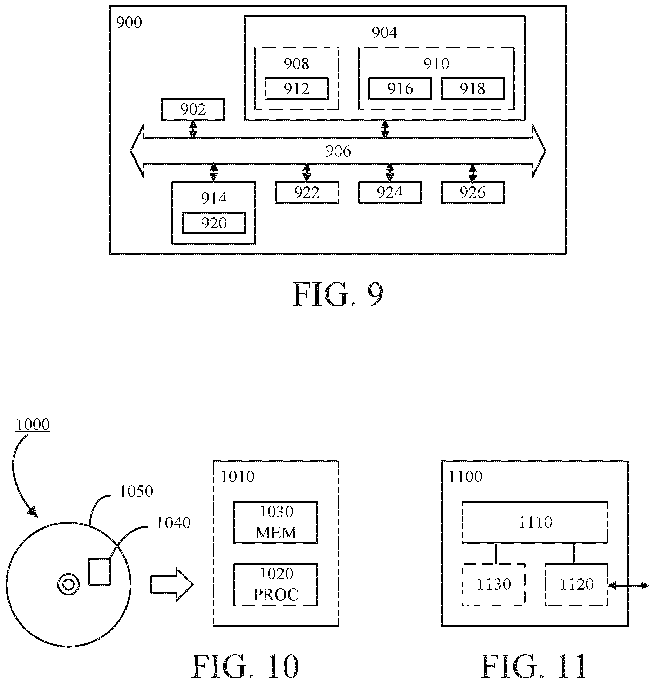

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906**. The computer system **900** may include at least one computing device having the processing circuitry **902**. The system bus **906** provides an interface for system components including, but not limited to, the memory **904** and the processing circuitry **902**. The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902**. A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902**. In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902**. The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 10** illustrates a computer program product **1000** exemplified as a non-transitory computer-readable medium in the form of a compact disc (CD) ROM **1050**. The computer-readable medium has stored thereon program code **1040** comprising instructions. The program code is loadable into processing circuitry (PROC; e.g., a data processing unit) **1020,** which may, for example, be comprised in a control unit **1010** (e.g., a VCU). When loaded into the processing circuitry, the program code may be stored in a memory (MEM) **1030** associated with, or comprised in, the processing circuitry. According to some examples, the program code may, when loaded into, and run by, the processing circuitry, cause execution of method steps according to, for example, any of the methods described herein.

**FIG.** 11 schematically illustrates, in terms of a number of functional units, the components of a control unit **1100** according to some examples. Processing circuitry **1110** is provided using any combination of one or more of a suitable central processing unit CPU, multiprocessor, microcontroller, digital signal processor DSP, etc., capable of executing software instructions stored in a computer program product, e.g. in the form of a storage medium **1130**. The processing circuitry **1110** may further be provided as at least one application specific integrated circuit ASIC, or field programmable gate array FPGA.

Particularly, the processing circuitry **1110** is configured to cause the control unit **1100** to perform a set of operations, or steps, such as any of the methods discussed in connection to **FIG. 1.**

For example, the storage medium **1130** may store the set of operations, and the processing circuitry **1110** may be configured to retrieve the set of operations from the storage medium **1130** to cause the control unit **1100** to perform the set of operations. The set of operations may be provided as a set of executable instructions. Thus, the processing circuitry **1110** is thereby arranged to execute methods as herein disclosed. In particular, there is disclosed a control unit **1100** comprising processing circuitry **1110,** an interface **1120** coupled to the processing circuitry **1110,** and a memory **1130** coupled to the processing circuitry **1110,** wherein the memory comprises machine readable computer program instructions that, when executed by the processing circuitry, causes the control unit to perform the methods discussed herein.

The storage medium **1130** may also comprise persistent storage, which, for example, can be any single one or combination of magnetic memory, optical memory, solid state memory or even remotely mounted memory.

The control unit **1100** may further comprise an interface **1120** for communications with at least one external device. As such, the interface **1120** may comprise one or more transmitters and receivers, comprising analogue and digital components and a suitable number of ports for wireline or wireless communication.

The processing circuitry **1110** controls the general operation of the control unit **1100,** e.g., by sending data and control signals to the interface **1120** and the storage medium **1130,** by receiving data and reports from the interface **1120,** and by retrieving data and instructions from the storage medium **1130.** Other components, as well as the related functionality, of the control node are omitted in order not to obscure the concepts presented herein.

A first non-exhaustive list of examples:

**Example 1:** A computer system for detection of ground surface height variation in a vicinity of a vehicle, the computer system comprising processing circuitry configured to: acquire measured backscatter from a radar transceiver mounted on the vehicle and directed at the ground surface; compare the measured backscatter to expected ground surface backscatter according to a current vehicle motion; and detect a ground surface height variation responsive to a difference between the expected ground surface backscatter and the measured backscatter satisfying a detection criterion.

**Example 2:** The computer system of **Example 1,** wherein the detected ground surface height variation comprises an edge of the ground surface.

**Example 3:** The computer system of any of **Examples 1-2,** wherein the processing circuitry is further configured to determine the expected ground surface backscatter according to the current vehicle motion.

**Example 4:** The computer system of any of **Examples 1-3,** wherein the current vehicle motion comprises vehicle velocity over the ground surface in a direction corresponding to a facing direction or boresight direction of the radar transceiver.

**Example 5:** The computer system of any of **Examples 1-4,** wherein the measured backscatter comprises signal power distribution in a space spanned by radial velocity of the radar transceiver relative to the ground surface and by radial distance of the radar transceiver from the ground surface.

**Example 6:** The computer system **Example 5,** wherein the expected ground surface backscatter indicates an expected shape in the space spanned by radial velocity of the radar transceiver relative to the ground surface and by radial distance of the radar transceiver from the ground surface.

**Example 7:** The computer system of **Example 6,** wherein the processing circuitry is configured to compare the measured backscatter to the expected ground surface backscatter by applying a spatial filter to the measured backscatter, wherein the spatial filter corresponds to the expected shape in the space spanned by radial velocity of the radar transceiver relative to the ground surface and by radial distance of the radar transceiver from the ground surface.

**Example 8:** The computer system of **Example 7,** wherein the detection criterion comprises that a signal power profile of the measured backscatter as filtered has a more prominent power decrease with radial distance than a corresponding signal power profile of the expected ground surface backscatter.

**Example 9:** The computer system of any of **Examples 1-8,** wherein the difference between the expected ground surface backscatter and the measured backscatter indicates one or more of: a distance from the radar transceiver to the ground surface height variation, and an angular orientation relative the radar transceiver of the ground surface height variation.

**Example 10:** The computer system of any of **Examples 1-9,** wherein the processing circuitry is further configured to cause a safety enhancing action responsive to detection of the ground surface height variation.

**Example 11:** A vehicle comprising the computer system of any of **Examples 1-8.**

**Example 12:** The vehicle of **Example 11,** further comprising one or more radar transceivers mounted on the vehicle and directed at the ground surface, and configured to provide the measured backscatter.

**Example 13:** A computer-implemented method for detection of ground surface height variation in a vicinity of a vehicle, the method comprising: acquiring, by processing circuitry of a computer system, measured backscatter from a radar transceiver mounted on the vehicle and directed at the ground surface; comparing, by the processing circuitry, the measured backscatter to expected ground surface backscatter according to a current vehicle motion; and detecting, by the processing circuitry, a ground surface height variation responsive to a difference between the expected ground surface backscatter and the measured backscatter satisfying a detection criterion.

**Example 14:** The method of **Example 13,** wherein the detected ground surface height variation comprises an edge of the ground surface.

**Example 15:** The method of any of **Examples 13-14,** further comprising determining, by the processing circuitry, the expected ground surface backscatter according to the current vehicle motion.

**Example 16:** The method of any of **Examples 13-15,** wherein the current vehicle motion comprises vehicle velocity over the ground surface in a direction corresponding to a facing direction or boresight direction of the radar transceiver.

**Example 17:** The method of any of **Examples 13-16,** wherein the measured backscatter comprises signal power distribution in a space spanned by radial velocity of the radar transceiver relative to the ground surface and by radial distance of the radar transceiver from the ground surface.

**Example 18:** The method **Example 17,** wherein the expected ground surface backscatter indicates an expected shape in the space spanned by radial velocity of the radar transceiver relative to the ground surface and by radial distance of the radar transceiver from the ground surface.

**Example 19:** The method of **Example 18,** wherein comparing the measured backscatter to the expected ground surface backscatter comprises applying, by the processing circuitry, a spatial filter to the measured backscatter, wherein the spatial filter corresponds to the expected shape in the space spanned by radial velocity of the radar transceiver relative to the ground surface and by radial distance of the radar transceiver from the ground surface.

**Example 20:** The method of **Example 19,** wherein the detection criterion comprises that a signal power profile of the measured backscatter as filtered has a more prominent power decrease with radial distance than a corresponding signal power profile of the expected ground surface backscatter.

**Example 21:** The method of any of **Examples 13-20,** wherein the difference between the expected ground surface backscatter and the measured backscatter indicates one or more of: a distance from the radar transceiver to the ground surface height variation, and an angular orientation relative the radar transceiver of the ground surface height variation.

**Example 22:** The method of any of **Examples 13-21,** further comprising causing, by the processing circuitry, a safety enhancing action responsive to detection of the ground surface height variation.

**Example 23:** A computer program product comprising program code for performing, when executed by the processing circuitry, the method of any of **Examples 13-22.**

**Example 24:** A non-transitory computer-readable storage medium comprising instructions, which when executed by the processing circuitry, cause the processing circuitry to perform the method of any of **Examples 13-22.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (290, 900) for detection of ground surface height variation (395, 795) in a vicinity of a vehicle (200), the computer system comprising processing circuitry configured to:

   acquire measured backscatter from a radar transceiver (293, 294, 393, 394) mounted on the vehicle and directed at the ground surface;
   compare the measured backscatter to expected ground surface backscatter according to a current vehicle motion; and
   detect a ground surface height variation responsive to a difference between the expected ground surface backscatter and the measured backscatter satisfying a detection criterion.

2. A vehicle (200) comprising the computer system of claim 1.

3. The vehicle of claim 2, further comprising one or more radar transceivers (293, 294, 393, 394) mounted on the vehicle and directed at the ground surface, and configured to provide the measured backscatter.

4. A computer-implemented method (100) for detection of ground surface height variation (395, 795) in a vicinity of a vehicle (200), the method comprising:

   acquiring (110), by processing circuitry of a computer system, measured backscatter from a radar transceiver (293, 294, 393, 394) mounted on the vehicle and directed at the ground surface;
   comparing (120), by the processing circuitry, the measured backscatter to expected ground surface backscatter according to a current vehicle motion; and
   detecting (130), by the processing circuitry, a ground surface height variation responsive to a difference between the expected ground surface backscatter and the measured backscatter satisfying a detection criterion (125).

5. The method of claim 4, wherein the detected ground surface height variation comprises an edge of the ground surface.

6. The method of any of claims 4-5, further comprising determining (121), by the processing circuitry, the expected ground surface backscatter according to the current vehicle motion.

7. The method of any of claims 4-6, wherein the current vehicle motion comprises vehicle velocity over the ground surface in a direction corresponding to a facing direction or boresight direction of the radar transceiver.

8. The method of any of claims 4-7, wherein the measured backscatter comprises signal power distribution (400, 500, 600, 800) in a space spanned by radial velocity of the radar transceiver relative to the ground surface and by radial distance of the radar transceiver from the ground surface.

9. The method claim 8, wherein the expected ground surface backscatter indicates an expected shape in the space spanned by radial velocity of the radar transceiver relative to the ground surface and by radial distance of the radar transceiver from the ground surface.

10. The method of claim 9, wherein comparing the measured backscatter to the expected ground surface backscatter comprises applying (123), by the processing circuitry, a spatial filter (510, 520) to the measured backscatter, wherein the spatial filter corresponds to the expected shape in the space spanned by radial velocity of the radar transceiver relative to the ground surface and by radial distance of the radar transceiver from the ground surface.

11. The method of claim 10, wherein the detection criterion comprises that a signal power profile of the measured backscatter as filtered has a more prominent power decrease (610, 810, 811, 812) with radial distance than a corresponding signal power profile of the expected ground surface backscatter.

12. The method of any of claims 4-11, wherein the difference between the expected ground surface backscatter and the measured backscatter indicates one or more of: a distance from the radar transceiver to the ground surface height variation, and an angular orientation relative the radar transceiver of the ground surface height variation.

13. The method of any of claim 4-12, further comprising causing (140), by the processing circuitry, a safety enhancing action responsive to detection of the ground surface height variation.

14. A computer program product (1000) comprising program code for performing, when executed by the processing circuitry, the method of any of claims 4-13.

15. A non-transitory computer-readable storage medium (1050) comprising instructions, which when executed by the processing circuitry, cause the processing circuitry to perform the method of any of claims 4-13.

<u>100</u>

```
┌─────────────────────────────────────┐
│              110                    │
│        Acquire measurements         │
└─────────────────────────────────────┘
                   │
                   ▼
┌─────────────────────────────────────────────────────────┐
│                       120                               │
│                 Compare with expected                   │
│  ┌───────────────┐ ┌───────────────┐ ┌───────────────┐ │
│  │      121      │ │      122      │ │      123      │ │
│  │Determine expected│ │ Select filter │ │ Apply filter │ │
│  └───────────────┘ └───────────────┘ └───────────────┘ │
└─────────────────────────────────────────────────────────┘
```

N ◄── 125
Criterion
satisfied?

Y

```
┌─────────────────────────────────────┐
│              130                    │
│        Detect height variation      │
└─────────────────────────────────────┘
                   │
                   ▼
┌─────────────────────────────────────┐
│              140                    │
│     Cause safety enhancing action   │
└─────────────────────────────────────┘
```

# FIG. 1

<u>200</u>

210      290      220

293      294

# FIG. 2

FIG. 3

400

FIG. 4

500

FIG. 5

FIG. 6

FIG. 7

FIG. 8

FIG. 9

FIG. 10

FIG. 11

**EUROPEAN SEARCH REPORT**

Application Number

EP 24 21 0498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/172580 A1 (ENGIMEC S R L [IT]; CASALE ELIA [IT]) 20 December 2012 (2012-12-20) * the whole document * ----- | 1-15 | INV. G01S7/41 G01S13/88 G01S13/931 |
| X | EP 3 074 787 B1 (TOYOTA MOTOR CO LTD [JP]) 11 July 2018 (2018-07-11) * paragraphs [0020], [0026], [0027], [0029], [0030]; figures 1,3-5 * ----- | 1-15 | ADD. G01S13/60 G01S13/87 |

TECHNICAL FIELDS
SEARCHED     (IPC)

G01S

The present search report has been drawn up for all claims

| Place of search | Date of completion of the search | Examiner |
|---|---|---|
| Munich | 14 March 2025 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 0498

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | Publication date | Patent family member(s) | Publication date |
|---|---|---|---|
| WO 2012172580 A1 | 20-12-2012 | EP 2588881 A1 | 08-05-2013 |
| | | WO 2012172580 A1 | 20-12-2012 |
| EP 3074787 B1 | 11-07-2018 | CN 105793731 A | 20-07-2016 |
| | | EP 3074787 A1 | 05-10-2016 |
| | | JP 6135481 B2 | 31-05-2017 |
| | | JP 2015103228 A | 04-06-2015 |
| | | KR 20160090350 A | 29-07-2016 |
| | | US 2017023943 A1 | 26-01-2017 |
| | | WO 2015079300 A1 | 04-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023169652 A1
- US 20040138802 A
- WO 2023169746 A1
- US 20040138802 A1